(19) **Europäisches Patentamt / European Patent Office / Office européen des brevets**

(11) **EP 2 070 048 B1**

(12) **EUROPEAN PATENT SPECIFICATION**

(45) Date of publication and mention
of the grant of the patent:
**10.11.2010 Bulletin 2010/45**

(51) Int Cl.:
***G06T 7/40*** (2006.01)

(21) Application number: **07838439.3**

(22) Date of filing: **18.09.2007**

(86) International application number:
**PCT/US2007/020227**

(87) International publication number:
**WO 2008/042112 (10.04.2008 Gazette 2008/15)**

(54) **Spatial masking using a spatial activity metric**

Räumliche Maskierung unter Verwendung eines örtlichen Aktivitätsmaßes

Masquage spatiale utilisant une mesure d'activité spatiale

(84) Designated Contracting States:
**DE FR GB**

(30) Priority: **29.09.2006 US 848296 P**

(43) Date of publication of application:
**17.06.2009 Bulletin 2009/25**

(73) Proprietor: **Thomson Licensing**
**92130 Issy-les-Moulineaux (FR)**

(72) Inventors:
• **LU, Xiaoan**
**Princeton, NJ 08540 (US)**
• **ZHAI, Jiefu**
**Plainsboro, NJ 08536 (US)**
• **GOMILA, Cristina**
**Princeton, NJ 08540 (US)**

(74) Representative: **Rittner, Karsten et al**
**Deutsche Thomson OHG**
**European Patent Operations**
**Karl-Wiechert-Allee 74**
**30625 Hannover (DE)**

(56) References cited:
**US-A- 5 214 507**

• **PICKERING M R ET AL: "A PERCEPTUALLY EFFICIENT VBR RATE CONTROL ALGORITHM" IEEE TRANSACTIONS ON IMAGE PROCESSING, IEEE SERVICE CENTER, PISCATAWAY, NJ, US, vol. 3, no. 5, 1 September 1994 (1994-09-01), pages 527-532, XP000476829 ISSN: 1057-7149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates to characterization of image texture using a spatial activity metric.

BACKGROUND ART

Within the field of image processing, a spatial activity metric provides a measure of the texture within a prescribed region of the image. Using this measure of texture enables many common image processing applications to exploit the spatial masking effect of the human vision system. Spatial masking occurs because the human vision system mechanism can tolerate more distortion introduced into textured regions than into smooth regions of an image. In case of a video image that has undergone compression; distortion introduced into the image corresponds to compression artifacts caused by quantization. In the case of watermarking of video images, introduced distortion corresponds to embedded data.

Many image processing applications use the spatial activity metric to distinguish between flat or low-detail regions, where introduced distortion appears more visible to the human eye, from busy or textured areas, where introduced distortion appears less visible.

US 5214507 relates to video quantization and encoding and teaches to estimate the amount of noise the human visual system would not be able to perceive when it is introduced into the image. This estimation comprises a measure of texture or activity.

Mark R. Pickering and John F. Arnold, "A Perceptually Efficient VBR Rate Control Algorithm", IEEE Transactions on Image Processing, IEEE Service Center, Piscataway, NJ, US, vol. 3, no. 5, 1 September 1994, pages 527 - 532, ISSN 1057-7149 discloses a variable bit rate (VBR) rate control algorithm. Quantisation and rate control are adjusted according to the activity of macroblocks in a video sequence.

While existing spatial activity metrics provide a good measure for grain-free images such as those associated with animation or those otherwise having low-resolution noise, such as low film grain strength, such metrics do not characterize the spatial activity in the presence of such noise. As a result, for images containing noise, spatial masking can yield to portions of the image with introduced distortion not otherwise masked.

Existing spatial activity metrics can be classified in three categories: (1) variance-based; (2) gradient-based; and (3) DCT-based. An explanation of each appears below, all based on a 16x16 block

Variance-based metric

This metric measures the spatial activity using the variance of luminance. A representative metric in this category is the metric used in the rate control algorithm of the MPEG-2 reference software.

$$ACT_{var} = 1 + \min_{i=1,2,3,4}(var_i), \qquad (1)$$

where $var_i$ is the variance for $i^{th}$ 8x8 subblock. Using this metric, the MPEG-2 reference software allows more distortion in the textured regions and less distortion in the smooth ones, and therefore obtains higher visual quality for the entire picture at the same bit rate.

Gradient-based metric

Two metrics exist in this category. The first metric $ACT_{gra}^{1}$ considers the horizontal and vertical gradients:

$$ACT_{gra}^{1} = \frac{1}{16 \times 15} \left\{ \sum_{i=0}^{14} \sum_{j=0}^{15} \sqrt{|I_{i,j} - I_{i+1,j}|} + \sum_{i=0}^{15} \sum_{j=0}^{14} \sqrt{|I_{i,j} - I_{i,j+1}|} \right\}, \qquad (2)$$

where $I_{ij}$ is the luminance value at pixel $(i,j)$. The second metric $ACT_{gra}^{2}$ takes into account the diagonal directions:

$$ACT^2_{gra} = \sum_{i=0}^{15} \sum_{j=0}^{15} \max_{n}(grad_{i,j,1}, \cdots, grad_{i,j,4});$$

$$(3)$$

where $grad_{i,j,n}$ is a local gradient computed by one of the following four 5x5 directional highpass filters at pixel $(i,j)$ [3]:

| 0 | 0 | 0 | 0 | 0 |
|---|---|---|---|---|
| 1 | 3 | 8 | 3 | 1 |
| 0 | 0 | 0 | 0 | 0 |
| -1 | -3 | -8 | -3 | -1 |
| 0 | 0 | 0 | 0 | 0 |

| 0 | 0 | 1 | 0 | 0 |
|---|---|---|---|---|
| 0 | 8 | 3 | 0 | 0 |
| 1 | 3 | 0 | -3 | -1 |
| 0 | 0 | -3 | -8 | 0 |
| 0 | 0 | -1 | 0 | 0 |

| 0 | 0 | 1 | 0 | 0 |
|---|---|---|---|---|
| 0 | 0 | 3 | 8 | 0 |
| -1 | -3 | 0 | 3 | 1 |
| 0 | -8 | -3 | 0 | 0 |
| 0 | 0 | -1 | 0 | 0 |

| 0 | 1 | 0 | -1 | 0 |
|---|---|---|---|---|
| 0 | 3 | 0 | -3 | 0 |
| 0 | 8 | 0 | -8 | 0 |
| 0 | 3 | 0 | -3 | 0 |
| 0 | 1 | 0 | -1 | 0 |

$$(4)$$

DCT-based metric

This metric makes uses the AC component of the DCT coefficients of luminance values. The first metric considers the absolute values of the AC coefficients:

$$ACT^1_{DCT} = \sum_{i=1}^{15} \sum_{j=1}^{15} |F(i,j)|;$$

$$(5)$$

where $F(i,j)$ is the DCT coefficient of frequency $(i,j)$. Another one normalizes the AC coefficients by the DC coefficient [3]:

$$ACT^2_{DCT} = \frac{1}{16 \times 16} \sum_{i=0}^{15} \sum_{j=0}^{15} \frac{F^2(i,j)}{F^2(0,0)} - 1.$$

$$(6)$$

The above metrics provide a good measure for grain-free or low-resolution images having low noise, such as film grain strength. However, these metrics treat noise, such as film grain as the texture and assign a relatively high value to a smooth region that consists mainly of strong noise, such as film grain. Hence, these metrics will mistakenly consider smooth regions with strong noise as textured regions. Consequently, such metrics will likely introduce more distortion than these smooth regions can mask.

Therefore, a need exists for a new spatial activity metric that effectively measures the spatial activity of a region in the presence of noise, such as film grain.

When applying a spatial activity metric measure in connection with spatial masking to improve the quality of a displayed image, the visual quality of the image serves as a measure of effectiveness of the metric. In case of video compression, decoded pictures serve as the displayed picture. In case of watermarking applications, the displayed pictures will possess embedded data. Measuring the effectiveness of the spatial activity metric involves extensive subjective evaluation.

To reduce the evaluation time, a need exists for an objective method that assesses the performance of a spatial activity metric.

BRIEF SUMMARY OF THE INVENTION

The invention is defined in independent claim 1.

Briefly, in accordance with a preferred embodiment of the present principles, there is provided a method for establishing a spatial activity metric for characterizing an image. The method commences by first determining a spatial activity metric. Thereafter, noise within the image (which can include film grain) is estimated. The spatial activity metric is then reduced by the amount of the estimated noise so that upon using the spatial activity metric in connection with spatial masking, the likelihood of unmasked distortion caused by the presence of noise, such as film grain will be reduced.

In accordance with another aspect of the present principles, there is provided a method for characterizing the effectiveness of a spatial activity metric of the type used to provide a measure of the texture in an image. The method commences by determining similarity of the measures made by the spatial activity metric for regions in the image of similar texture. A determination is also made of the difference in the measures made by the spatial activity metric for regions of different texture in the image. The extent to which a spatial activity measure provides similar measures for similarly textured regions and a large spread between measures for regions of different texture reflects a high degree of performance for that metric.

BRIEF DESCRIPTION OF THE DRAWINGS

FIGURE 1 depicts in flow chart form the steps of a process for applying a spatial activity metric established in accordance with a first embodiment of the present principles, to an image;
FIGURE 2 depicts in flow chart form the steps of a process for applying a spatial activity metric established in accordance with a second embodiment of the present principles, to an image;
FIGURE 3 depicts in flow chart form the steps of a process for applying a spatial activity metric established in accordance with a third embodiment of the present principles, to an image;
FIGURE 4 depicts in flow chart form the steps of a process in accordance with another aspect of the present principles for characterizing the effectiveness of a spatial activity metric;
FIGURE 5 depicts a block schematic diagram of an exemplary video encoder illustrating how a spatial activity metric can apply with regard to the rate control algorithm employed by the encoder;
FIGURE 6 depicts in flow chart form the steps of a process in accordance with another aspect of the present principles for achieving rate control in the encoder of FIG. 5; and
FIGURE 7 depicts a block schematic diagram of a visual quality analyzer that applies a spatial activity metric to rank video quality.

DETAILED DESCRIPTION

While existing spatial activity metrics provide a good measure for grain-free or low-resolution images where the film grain strength is low, such metrics exhibit a strong dependency not only on spatial activity but also on the brightness in the presence of film grain. For purposes of discussion, film grain generally appears within an image as a random texture generated during film development. Film grain is generally regarded as additive, signal-dependent noise, which differs in size, shape and intensity depending on the film stock, lightening condition and development process. The intensity of film grain appears highly correlated to pixel intensity, which explains why existing spatial activity metrics strongly depend on brightness.

In accordance with the present principles, there is provided a method for establishing a spatial activity metric that has greatly reduced dependency on the brightness. The method of the present principles reduces the dependency on brightness by (1) estimating the film grain, typically through modeling, and (2) removing the film grain strength from the spatial activity metric.

Film Grain Estimation

Film grain can be estimated, typically by modeling, in accordance with the following relationship:

$$g(i,j) = f(i,j) + f(i,j)^{\gamma} * n(i,j), \tag{7}$$

where $g(i,j)$ and $f(i,j)$ constitute observed and noise-free pixel values at location $(i,j)$, respectively, $\gamma$ is a constant given the film stock and shooting condition, and $n(i,j)$ is a zero mean normal distributed noise. The product of $f(i,j)^{\gamma} * n(i,j)$ characterizes the film grain. Usually $\gamma$ falls between 0.3 - 0.7, and in most cases, has a value of around 0.5. For a smooth region where $f(i,j)$ reside close together, equation (8) can be approximated by:

$$g(i,j) = f(i,j) + \overline{f}^{\gamma} \times n(i,j), \qquad (8)$$

where $\overline{f} = \frac{1}{M \times N} \sum_{i=1}^{M} \sum_{j=1}^{N} f(i,j) \approx f(i,j)$. Assuming $n(i,j)$ is independent of $f(i,j)$, the relation of the variance can be obtained as follows:

$$\sigma_g^2 = \sigma_f^2 + \overline{f}^{2\gamma} \times \sigma_n^2 = \sigma_f^2 + \sigma_{grain}^2, \qquad (9)$$

where $\sigma_g^2$, $\sigma_f^2$ and $\sigma_n^2$ are the variance of $g(i,j)$, $f(i,j)$ and $n(i,j)$, respectively, and $\sigma_{grain}^2$ is the variance of film grain.

For images initially recorded on film, and thereafter converted to high resolution video, usually a large number amount of regions appear flat or almost flat, that is they lack texture. The variances of these regions depend mostly on the film grain, i.e., $\sigma_f^2 \approx 0$ and $\sigma_g^2 \approx \sigma_n^2$. For flat regions with similar brightness, the characteristic of the grain are homogeneous, which results in a very close $\sigma_g^2$ smaller than the variance of the textured regions. As a consequence, the histogram of the variance usually has a small peak. Therefore a histogram-based method of estimating the grain intensity will produce good results.

To make use of a histogram-based method, regions within the image first undergo classification into multiple groups according to separate brightness ranges. For each group, calculation of the histogram of variances occurs to enable identification of the first peak $\sigma_{peak,i}^2$. Using $\sigma_{peak,i}^2$ from all brightness ranges, $\sigma_{grain}^2$ can be derived as a linear function of the brightness using linear regression.

To eliminate the effect of film grain, the film grain term gets deducted from the existing variance-based metric $ACT_{var}$ in accordance with the relationship:

$$ACT_{var}^{new} = ACT_{var} - m(\sigma_{grain}^2), \qquad (10)$$

where $m(\sigma_{grain}^2)$ is a function of $\sigma_{grain}^2$. In a particular embodiment, the effect of the film grain can be regarded as the variance of film grain, i.e., $m(\sigma_{grain}^2) = \sigma_{grain}^2$.

When considering noise other than film grain, similar methods can be used to model the noise and remove its effect on the spatial activity metric. Extending the approach of removing the effect of noise, such as film grain, from other existing spatial activity metrics will yield improved performance for pictures with noise.

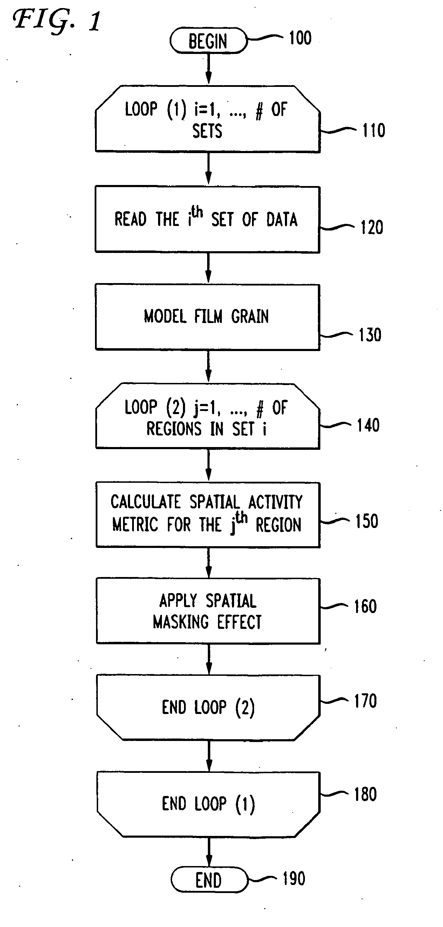

FIG. 1 depicts in flow chart form the steps of a process for applying a spatial activity metric established in accordance with a first embodiment of the present principles, to an image. The process of FIG. 1 begins at step 100 during which various variables undergo initialization. Following step 100, execution of step 110 occurs to initiate a first iterative loop, depicted as Loop(1), whose the loop index value $i$ initially equals to unity. During each execution of this loop, the loop index value $i$ increases by unity. Loop(1) includes steps 120-170. Step 120 undergoes execution to initiate reading of an $i^{th}$ set of data from an image.

Thereafter, step 130 undergoes execution and film grain estimation occurs, typically by the modeling process described previously.

Step 140 follows step 130 and a second iterative loop begins, depicted as Loop(2), whose the loop index value $j$ initially equals unity. During each execution of this loop, the loop index value $j$ increases by unity. Loop(2) includes steps 150-160. Step 150 undergoes execution to calculate the spatial activity metric for the $j^{th}$ region. Repeated execution of step 150 enables calculation of the spatial activity metric for every region for the $i^{th}$ set of data. For block-based video compression applications such as MPEG-4 AVC, a region refers to a 16x 16 macroblock.

Calculation of the spatial activity metric during step 150 begins by initially establishing a metric; typically using one of the known techniques described previously. Thus, the initially established spatial activity metric could constitute a variance-based, gradient-based, or DCT-based metric. Following initial establishment of the metric, the estimated noise, for example film grain, typically obtained from modeling is subtracted from the metric to remove the effect of such noise. The spatial activity metric calculated during step 150 then gets applied to the image during step 160. When applied to the image, the spatial activity metric provides a measure of texture to permit spatial masking by introducing distortion such that the introduced distortion appears less visible in flat regions where distortion is more visible to the human eye. The second loop (Loop(2)) ends during step 170. In other words, the steps within Loop(2) undergo re-execution until such time as the loop variable *j* reaches its maximum value, corresponding to the number of total regions. The first loop (Loop(1)) ends during step 180. In other words, the steps within Loop(1) undergo re-execution and until such time as the loop variable *i* reaches its maximum value, corresponding to the number of total sets of data to be read. The entire process ends at step 190 after every region for all sets of data has undergone processing.

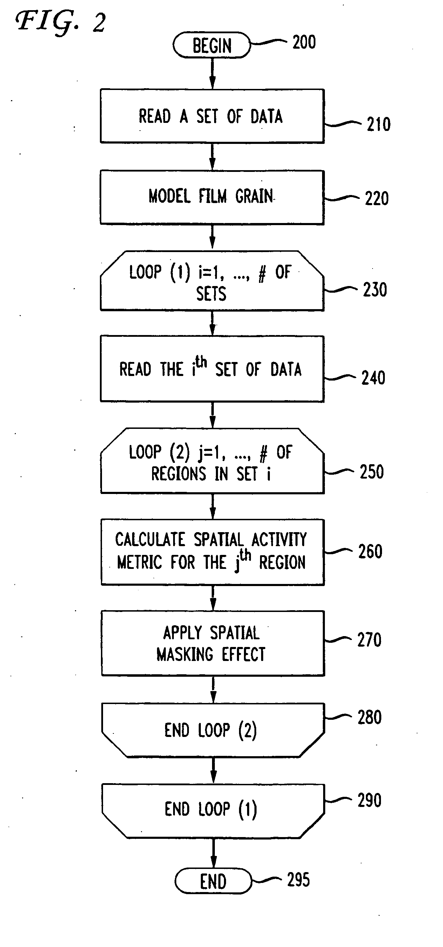

FIGURE 2 depicts in flow chart form the steps of a process for applying a spatial activity metric established in accordance with a second embodiment of the present principles, to an image. As will become better understood hereinafter, the process of FIG. 2 includes many of the same steps as that of FIG. 1. However, the process of FIG. 2 differs by virtue of modeling the film grain using a set of data that different from the set of data on which the model operates. In particular embodiment, the first n pictures of a sequence can serve to model film grain, whereas the model gets applied to every picture in the sequence.

Referring to FIG. 2, the spatial activity metric application process commences upon execution of the begin step (step 200) during which initialization occurs. Thereafter, step 210 undergoes execution during which a set of data used for film grain modeling gets read followed by extraction of model parameters (e.g., modeling of the grain) to estimate noise during step 220.

Step 230 then undergoes execution to initiate a first iterative loop, depicted as Loop(1), whose the loop index value *i* initially equals unity. During each execution of this loop, the loop index value *i* increases by unity. This loop includes steps 240-280. Step 240 undergoes execution to initiate reading of an *i*th set of data from an image. Step 250 initiates a second iterative loop, depicted as Loop(2), whose the loop index value *j* initially equals unity. During each execution of this loop, the loop index value *j* increases by unity. Loop(2) includes steps 260-270. Step 260 undergoes execution to calculate the spatial activity metric for the *j*th region. Repeated execution of step 260 assures calculation of the spatial activity metric for every region for this set of data.

Calculation of the spatial activity metric during step 260 begins by initially establishing a metric, typically using one of the known techniques described previously. Initially, the spatial activity metric could constitute a variance-based, gradient-based, or DCT-based metric. Following the initial establishment of the metric, the estimated noise, for example film grain, typically obtained from modeling, get subtracted, to remove the effect of such noise on the metric. The spatial activity metric calculated during step 260 then gets applied to the image during step 270. The spatial activity metric provides a measure of texture to permit spatial masking by introducing distortion so that the introduced distortion introduced appears less visible in flat regions where distortion is more visible to the human eye. The second loop (Loop(2)) ends during step 280. In other words, the steps within Loop(2) undergo re-execution and until such time as the loop variable *j* reaches its maximum value, corresponding to the number of total regions. The first loop (Loop(1)) ends during step 290. In other words, the steps within Loop(1) undergo re-execution and until such time as the loop variable *i* reaches its maximum value, corresponding to the number of total sets of data to be read. The entire process ends at step 295 after every region in all sets of data have undergone processing.

The advantage of the process of FIG. 2 as compared to the process of FIG. 1 is that modeling of film grain in FIG. 2 occurs using a set of data possibly different from the data on which the model gets applied. The model accuracy increases by increasing the number of samples for modeling. Using a portion of all sets of data for modeling will increase the speed of the process.

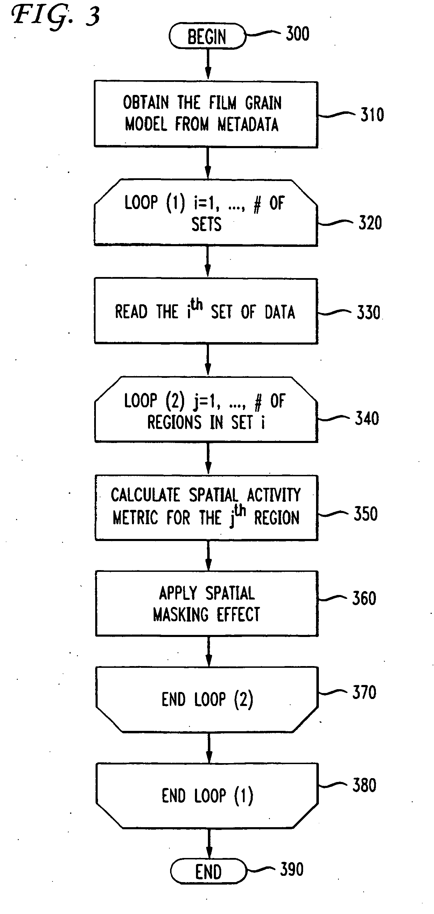

FIGURE 3 depicts in flow chart form a process for applying a spatial activity metric established in accordance with a third embodiment of the present principles, to an image. The process of FIG. 3 constitutes a variation of the process of FIG. 1 by making use of a film grain model provided as metadata.

The process of FIG. 3 begins at step 300 during which various variables get initialized. Following step 300, step 310 undergoes execution to obtain the film grain model from metadata. Thereafter, step 320 undergoes execution to begin a first iterative loop, depicted as Loop(1), whose loop index value *i* initially equals unity. During each execution of this loop, the loop index value *i* increases by unity. The loop includes steps 330-370. Step 330 undergoes execution to initiate reading of an *i*th set of data from an image. Step 340 follows step 330 and a second iterative loop begins, depicted as Loop(2), whose loop index value *j* initially equals unity. During each execution of Loop(2), the loop index value *j* increases by unity. Loop(2) includes steps 350-360. Step 350 undergoes execution to commence calculation of the spatial activity metric for the *j*th region. Repeated execution of step 350 enables calculation of the spatial activity metric for every region for this set of data.

Calculation of the spatial activity metric during step 350 begins by initially establishing a metric, typically using one of the known techniques described previously. Initially, the spatial activity metric could constitute a variance-based, gradient-based, or DCT-based metric. Following the initial establishment of the metric, the estimated noise, for example film grain, typically obtained from modeling, get subtracted, to remove the effect of such noise on the metric. The spatial activity metric calculated during step 350 then gets applied to the image during step 360. The activity metric provides a measure of texture to permit spatial masking by introducing distortion so that the introduced distortion introduced appears less visible in flat regions where distortion is more visible to the human eye.

The second loop (Loop(2)) ends during step 370. In other words, the steps within Loop(2) undergo re-execution and until such time as the loop variable $j$ reaches its maximum value, corresponding to the number of total regions. The first loop (Loop(1)) ends during step 380. In other words, the steps within Loop(1) undergo re-execution and until such time as the loop variable $i$ reaches its maximum value, corresponding to the number of total sets of data to be read. The entire process ends at step 390 after every region in all sets of data have undergone processing.

Spatial Activity Metric Performance Assessment Method

Generally, a spatial activity metric assists in exploiting the spatial masking effect. For example, to obtain homogeneous high visual quality in video compression applications, the regions associated with smaller spatial activity metric measures undergo compression at lower quantization stepsizes. In contrasts, regions associated with larger spatial activity metric measures undergo compression at higher quantization stepsizes. Therefore, the performance of a spatial activity metric will strongly influence the visual quality of displayed pictures. It is common to judge the performance of a spatial activity metric by assessing the visual quality of the displayed pictures. Such a process involves extensive subjective evaluation.

In accordance with another aspect of the present principles, there is provided a method for assessing the performance of a spatial activity metric. As described hereinafter, the method makes such an assessment by objectively assessing the performance of the metric for both smooth and textured regions.

Smooth area concentration

Preferably, an effective spatially activity metric should assign similar measures to regions with similar visual smoothness, i.e., the spatial activity metric measures should concentrate around one level for all smooth regions.

Spread between smooth and busy regions

In order for a given image processing application, such as video compression, to exploit the masking effect and allow more distortion in textured regions, the spatial activity metric measure should provide a spread between the smooth and textured (e.g., busy regions).

From the above two criteria, an assessment, hereinafter referred to as a "Smooth Busy Area Spread (SBAS)" can be defined to quantify how a spatial activity metric (1) assigns measures to regions with similar visual smoothness and (2) separates the smooth regions from the busy ones:

Mathematically, the Smooth Busy Area Spread can be expressed by:

$$\text{SBAS} = \frac{|avg_{pic} - avg_{flat}|}{\sigma_{flat}}, \tag{11}$$

where $avg_{pic}$ is the average metric for the whole picture, $avg_{flat}$ and $\sigma_{flat}$ are the mean and the standard deviation of the metric in the smooth regions, respectively. Note that the smooth regions are manually selected and serve as visual hints for this method. When a spatial activity metric assigns similar measures to regions with similar visual smoothness, $\sigma_{flat}$ will be small. On the other hand, when the spatial metric separates the smooth regions from the textured ones, $|avg_{pic} - avg_{flat}|$ becomes large. Therefore, the larger the value of SBAS, the more effective the spatial activity metric.

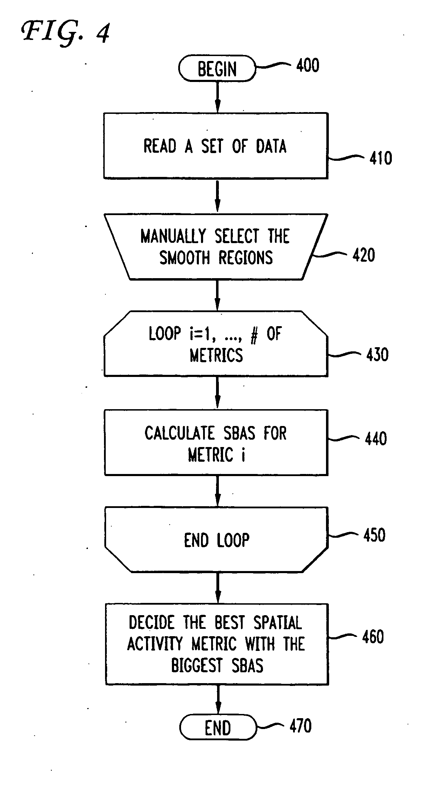

Figure 4 illustrates a method for assessing the effectiveness of a spatial activity metric in accordance with an illustrative embodiment of the present principles. The assessment method commences upon execution of step 400 during which initialization occurs. Thereafter, step 410 undergoes execution and reading of a set of image data occurs. Manual selection of smooth regions within the image occurs during step 420. Next, during step 430, a first loop begins, with the loop index value $i$ initially equal to unity. The loop includes steps 440 and upon each execution of the loop, the index value $i$ increases until the last of all of the spatial activity metrics has undergone analysis as described below.

During each execution of step 440, a value of SBAS, as described with respect to equation (11) gets calculated for each spatial activity metric $i$. The loop ends at step 450. In other words, the steps within this loop undergo re-execution until such time as the loop variable $i$ reaches its maximum value, corresponding to the number of spatial activity metrics undergoing evaluation. During step 460, an overall evaluation of the spatial activity metrics occurs. The spatial activity metric having the largest SBAS becomes the "best" metric.

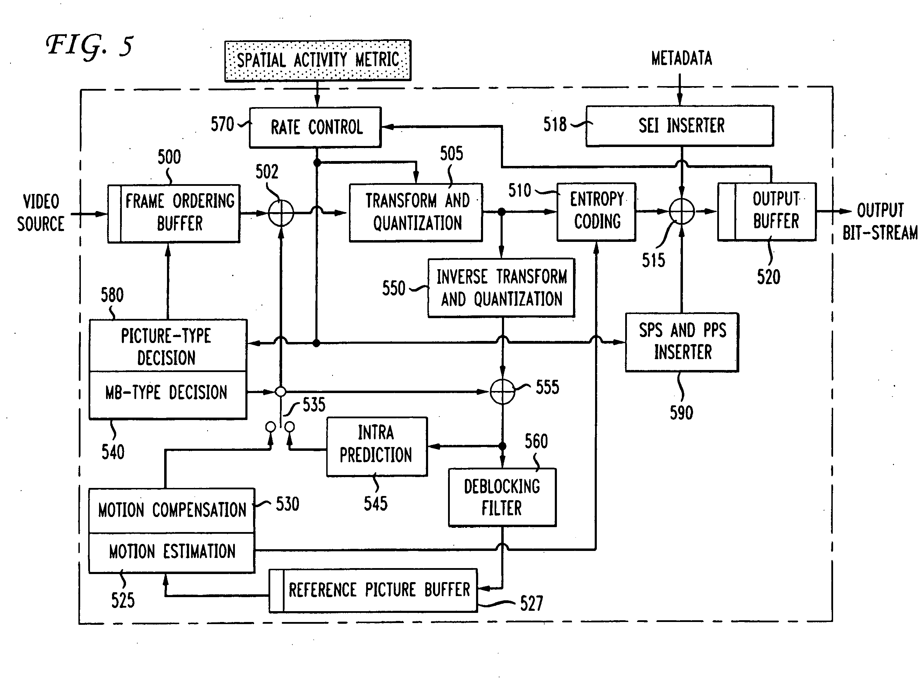

FIGURE 5 depicts a block schematic diagram of an exemplary video encoder illustrating how a spatial activity metric can apply with regard to the rate control algorithm employed by the encoder. The encoder of FIG. 5 comprises a frame ordering buffer 500 that buffers an incoming video signal. The frame ordering buffer 500 has its output coupled to a first input of a summing block 502 whose output connects to a transform and quantization block 505 that performs transformation and quantization on an incoming video signal from the summing block prior to entropy coding performed by entropy coding block 510. The entropy coding block 510 has its output coupled to a first input of a summing block 515 whose output connects to an output buffer 520 that stores encoded video prior to output by the encoder. A second input of the summing block receives Supplemental Enhancement Information (SEI) messages from an SEI inserter 518 that produces such messages from input Metadata.

The coding performed by the entropy coding block 510 depends on a motion estimation performed by motion estimation block 525 on a reference picture stored in a reference picture store 527. A motion compensation block 530 determines the amount of motion compensation needed for the motion estimation established by the motion estimation block 525. The motion estimation is applied via a switch 535 to a second input of the summing block 502 during operation of the encoder in the inter-prediction mode. A macroblock (MB) decision block 540 controls the switch 535 to select between inter-prediction and intra-prediction coding based on the which mode affords the best coding for the instant macroblock.

When operating in the intra-prediction mode, the switch 535 couples the output of an intra-prediction block 545 that provides a same-picture prediction based on the sum of the output signals of an inverse transform and quantization block 550 and the macroblock decision block 540, as provided by a summing block 555. The inverse transform and quantization block 550 performs an inverse and quantization operation on the output signal produced by the transform and quantization block 505. The output of the summing block 555 connects to a deblocking filter 560 that performs on pictures for subsequent storage in the reference picture buffer 527.

The encoder of FIG. 5 includes a rate control block 570 that controls the quantization level of the transform and quantization block 505. Additionally, the rate control block 570 also controls a picture-type decision block that controls the picture type decision block 580 to control the type of pictures that undergo coding. Further, the rate control block 570 also controls a sequence parameter set (SPS) and picture parameter set (PPS) inserter 590 that supplies sequence sets to the summing block for insertion into the coded video.

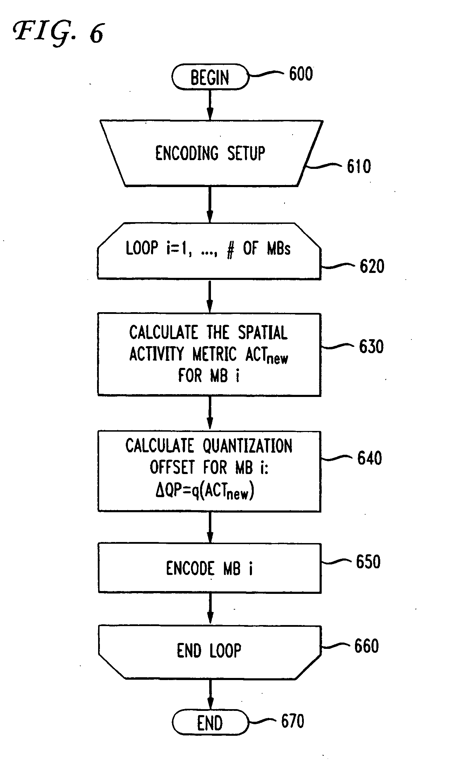

As seen in FIG. 5, the rate control block 570 operates in response to a spatial activity metric. FIGURE 6 depicts in flow chart form the steps of a process for applying the spatial activity metric within the rate control block 570 of the encoder of FIG. 5. The process commences at step 600 during which initialization occurs. Thereafter, step 610 undergoes execution during which encoder set up occurs, typically with the aid of an operator. The encoder setup can involve the setup of the target bit-rate as well as the specification of one or more parameters associated with the encoding process. Step 620 follows step 610 to begin a loop whose index value $i$ corresponds to the number of macroblocks (MBs). Initially, the index value $i$ equals unity. The loop contains steps 630-650. During each execution of step 630, a value is calculated for the spatial activity metric $ACT_{new}$ for the $i^{th}$ macroblock ($MB_i$). During each execution of step 640, a calculation is made for the quantization offset for the $i^{th}$ macroblock in accordance with the relationship:

$$\Delta QP = q(ACT_{new}) \qquad\qquad (12)$$

In this way, the spatial activity metric will map to the quantization step size or QP parameter offsets. During step 650, the encoder will encode the $i^{th}$ macroblock ($MB_i$), typically using an existing compression standard, such as MPEG-2, MPEG-4 AVC or VC-1. The loop ends at step 660. In other words, the steps the undergo re-execution and until such time as the loop variable $i$ reaches its maximum value, corresponding to the number of macroblocks. Thereafter, the process ends at step 670.

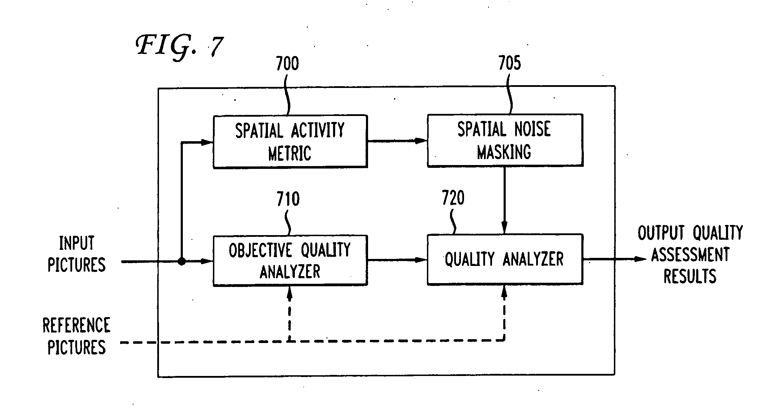

Figure 7 depicts a block schematic diagram of a visual quality analyzer that applies the spatial activity metric in ranking the video quality. The video quality analyzer includes a spatial activity metric 700 for application to input pictures. The measure of texture provided by the spatial activity metric 700 controls the spatial noise masking performed by block 705.

The input pictures undergo objective quality analysis, with regard to reference pictures, by a first quality analyzer 710. A second quality analyzer 720 receives the output of the first analyzer along with the spatial masked pictures from the block 705 for comparison against the set of reference pictures. The output of the second analyzer 720 provides a quality assessment result.

The foregoing describes a technique for characterizing an image using a spatial activity metric that takes account of image noise.

**Claims**

1. A method comprising the steps of:

establishing a spatial activity metric for characterizing texture of an image (150);
the method being **characterised by**
estimating noise within the image (130); and
modifying the established spatial activity metric by subtracting the estimated noise (150) to facilitate use of the modified spatial activity metric in image processing of noisy images to exploit spatial masking by the human vision system.

2. The method according to claim 1 wherein the spatial activity metric is initially established in accordance with one of a variance within the image, an image gradient or discrete cosine transformation coefficients.

3. The method according to claim 1 or 2 wherein the spatial activity metric is established and the noise is estimated noise from a common set of image data.

4. The method according to claim 1 or 2 wherein the spatial activity metric is established and the noise is estimated noise from different sets of data.

5. The method according to any of the claims 1 to 4 wherein the noise is estimated using a model obtained via metadata.

6. The method according to any of the claims 1 to 5 further comprising the step of applying the modified spatially activity metric to an encoder to vary encoder rate control.

7. The method according to any of the claims 1 to 5 further comprising the step of applying the modified spatially activity metric to an encoder to control encoder quantization offset.

**Patentansprüche**

1. Verfahren, das die folgenden Schritte umfasst:

Festsetzen einer Metrik der räumlichen Aktivität zum Charakterisieren der Textur eines Bilds (150);
wobei das Verfahren **gekennzeichnet ist durch** Schätzen des Rauschens innerhalb des Bilds (130); und
Ändern der festgesetzten Metrik der räumlichen Aktivität durch Subtrahieren des geschätzten Rauschens (150), um die Verwendung der geänderten Metrik der räumlichen Aktivität in der Bildverarbeitung verrauschter Bilder zu ermöglichen, um die räumliche Maskierung **durch** das menschliche Sehsystem auszunutzen.

2. Verfahren nach Anspruch 1, bei dem die Metrik der räumlichen Aktivität anfangs in Übereinstimmung mit einer Streuung innerhalb des Bilds und/oder mit einem Bildgradienten und/oder mit Koeffizienten einer diskreten Cosinustransformation festgesetzt wird.

3. Verfahren nach Anspruch 1 oder 2, bei dem die Metrik der räumlichen Aktivität aus einem gemeinsamen Satz von Bilddaten festgesetzt wird und das Rauschen geschätztes Rauschen aus dem gemeinsamen Satz von Bilddaten ist.

4. Verfahren nach Anspruch 1 oder 2, bei dem die Metrik der räumlichen Aktivität aus unterschiedlichen Sätzen von Daten festgesetzt wird und das Rauschen geschätztes Rauschen aus unterschiedlichen Sätzen von Daten ist.

5. Verfahren nach einem der Ansprüche 1 bis 4, bei dem das Rauschen unter Verwendung eines über Metadaten erhaltenen Modells geschätzt wird.

6. Verfahren nach einem der Ansprüche 1 bis 5, das ferner den Schritt des Anwendens der geänderten Metrik der räumlichen Aktivität auf einen Codierer zum Ändern der Ratensteuerung des Codierers umfasst.

7. Verfahren nach einem der Ansprüche 1 bis 5, das ferner den Schritt des Anwendens der geänderten Metrik der räumlichen Aktivität auf einen Codierer zum Steuern des Quantisierungsversatzes des Codierers umfasst.

**Revendications**

1. Procédé comprenant les étapes consistant à :

   établir une mesure d'activité spatiale pour caractériser la texture d'une image (150) ;
   le procédé étant **caractérisé par**
   une estimation du bruit dans l'image (130) ; et
   une modification de la mesure d'activité spatiale établie en soustrayant le bruit estimé (150) pour faciliter l'utilisation de la mesure d'activité spatiale modifiée dans un traitement d'image des images bruyantes pour exploiter un masquage spatial par le système de vision humaine.

2. Procédé selon la revendication 1, où la mesure d'activité spatiale est initialement établie selon une variance au sein de l'image, un gradient d'image ou des coefficients de transformée en cosinus discrète.

3. Procédé selon la revendication 1 ou 2, où la mesure d'activité spatiale est établie et le bruit est un bruit estimé à partir d'un ensemble de données d'image commun.

4. Procédé selon la revendication 1 ou 2, où la mesure d'activité spatiale est établie et le bruit est un bruit estimé à partir d'ensembles de données différents.

5. Procédé selon une quelconque des revendications 1 à 4, où le bruit est estimé à l'aide d'un modèle obtenu via des métadonnées.

6. Procédé selon une quelconque des revendications 1 à 5, comprenant en outre l'étape d'application de la mesure d'activité spatialement modifiée sur un codeur pour modifier la commande du débit du codeur.

7. Procédé selon une quelconque des revendications 1 à 5, comprenant en outre l'étape d'application de la mesure d'activité spatialement modifiée sur un codeur pour commander le décalage de quantification du codeur.

*FIG. 1*

```
              ( BEGIN )——— 100
                  |
                  v
        ┌─────────────────────┐
        │ LOOP (1) i=1, ..., # OF │——— 110
        │        SETS          │
        └─────────────────────┘
                  |
                  v
        ┌─────────────────────┐
        │ READ THE iᵗʰ SET OF DATA │——— 120
        └─────────────────────┘
                  |
                  v
        ┌─────────────────────┐
        │   MODEL FILM GRAIN   │——— 130
        └─────────────────────┘
                  |
                  v
        ┌─────────────────────┐
        │ LOOP (2) j=1, ..., # OF │——— 140
        │  REGIONS IN SET i    │
        └─────────────────────┘
                  |
                  v
        ┌─────────────────────┐
        │ CALCULATE SPATIAL ACTIVITY │——— 150
        │ METRIC FOR THE jᵗʰ REGION │
        └─────────────────────┘
                  |
                  v
        ┌─────────────────────┐
        │   APPLY SPATIAL      │——— 160
        │   MASKING EFFECT     │
        └─────────────────────┘
                  |
                  v
        ┌─────────────────────┐
        │    END LOOP (2)      │——— 170
        └─────────────────────┘
                  |
                  v
        ┌─────────────────────┐
        │    END LOOP (1)      │——— 180
        └─────────────────────┘
                  |
                  v
              ( END )——— 190
```

*FIG. 2*

```
                    ( BEGIN )——— 200
                        │
                        ▼
          ┌──────────────────────────┐
          │    READ A SET OF DATA     │——— 210
          └──────────────────────────┘
                        │
                        ▼
          ┌──────────────────────────┐
          │     MODEL FILM GRAIN      │——— 220
          └──────────────────────────┘
                        │
                        ▼
         ╱──────────────────────────╲
         │  LOOP (1) i=1, ..., # OF   │——— 230
         │           SETS             │
         ╲──────────────────────────╱
                        │
                        ▼
          ┌──────────────────────────┐
          │  READ THE iᵗʰ SET OF DATA │——— 240
          └──────────────────────────┘
                        │
                        ▼
         ╱──────────────────────────╲
         │  LOOP (2) j=1, ..., # OF   │——— 250
         │    REGIONS IN SET i        │
         ╲──────────────────────────╱
                        │
                        ▼
          ┌──────────────────────────┐
          │ CALCULATE SPATIAL ACTIVITY│——— 260
          │  METRIC FOR THE jᵗʰ REGION │
          └──────────────────────────┘
                        │
                        ▼
          ┌──────────────────────────┐
          │      APPLY SPATIAL        │——— 270
          │    MASKING EFFECT         │
          └──────────────────────────┘
                        │
                        ▼
         ╱──────────────────────────╲
         │      END LOOP (2)          │——— 280
         ╲──────────────────────────╱
                        │
                        ▼
         ╱──────────────────────────╲
         │      END LOOP (1)          │——— 290
         ╲──────────────────────────╱
                        │
                        ▼
                    ( END )——— 295
```

*FIG. 3*

BEGIN — 300

OBTAIN THE FILM GRAIN
MODEL FROM METADATA — 310

LOOP (1) i=1, ..., # OF
SETS — 320

READ THE $i^{th}$ SET OF DATA — 330

LOOP (2) j=1, ..., # OF
REGIONS IN SET i — 340

CALCULATE SPATIAL ACTIVITY
METRIC FOR THE $j^{th}$ REGION — 350

APPLY SPATIAL
MASKING EFFECT — 360

END LOOP (2) — 370

END LOOP (1) — 380

END — 390

*FIG. 4*

BEGIN — 400

READ A SET OF DATA — 410

MANUALLY SELECT THE SMOOTH REGIONS — 420

LOOP i=1, ..., # OF METRICS — 430

CALCULATE SBAS FOR METRIC i — 440

END LOOP — 450

DECIDE THE BEST SPATIAL ACTIVITY METRIC WITH THE BIGGEST SBAS — 460

END — 470

## FIG. 5

## FIG. 6

BEGIN — 600

ENCODING SETUP — 610

LOOP i=1, ..., # OF MBs — 620

CALCULATE THE SPATIAL ACTIVITY METRIC $ACT_{new}$ FOR MB i — 630

CALCULATE QUANTIZATION OFFSET FOR MB i: $\Delta QP = q(ACT_{new})$ — 640

ENCODE MB i — 650

END LOOP — 660

END — 670

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5214507 A

**Non-patent literature cited in the description**

- **Mark R. Pickering ; John F. Arnold.** A Perceptually Efficient VBR Rate Control Algorithm. *IEEE Transactions on Image Processing,* 01 September 1994, vol. 3 (5), ISSN 1057-7149, 527-532